# FASCICULE DE BREVET EUROPEEN

(11) **EP 0 827 359 B1**
(45) Date de publication et mention de la délivrance du brevet: **12.05.2004**
(21) Numéro de dépôt: 97430004.8
(22) Date de dépôt: 30.01.1997
(51) Int. Cl.: H04Q 11/04, H04Q 3/00, H04M 15/00

(54) **Procédé et protocole d'accès économique, automatique et transparent à un détaillant en télécommunications sur RNIS**
Billiges, automatisches und transparentes Zugriffverfahren und Protokoll für Telekommunikationsdienste-Anbieter über ISDN
Low-cost, automatic and transparent acces method and protocol for a telecommunication provider in ISDN

(30) Priorité: 31.01.1996 FR 9601432; 22.07.1996 FR 9609408
(43) Date de publication de la demande: 04.03.1998
(73) Titulaire: FRANCE TELECOM, 75015 Paris (FR)
(72) Inventeur: Courvoisier, Denis, 13001 Marseille (FR)
(74) Mandataire: Domange, Maxime

(56) Documents cités:
- EP-A- 0 493 896
- WO-A-88/07797
- WO-A-94/28683
- US-A- 5 272 748
- US-A- 5 425 085
- MATSUO N ET AL: "PERSONAL TELEPHONE SERVICES USING IC-CARDS" IEEE COMMUNICATIONS MAGAZINE, vol. 27, no. 7, juillet 1989, pages 41-48, XP000038828

## Description

La présente invention est relative à un procédé, un protocole et un dispositif de télécommunication, vocale notamment, entre des abonnés d'un réseau commuté de télécommunication (Réseau numérique à Intégration de Services [ou RNIS] ou Réseau Téléphonique Commuté Public [ou RTCP]).

Le domaine technique de l'invention est celui des télécommunications.

L'invention s'applique à des télécommunications de données ou messages numériques ou graphiques, par exemple à des transferts de fichiers avec un débit de 64 kilobits par seconde ou bien à des transmissions de télécopies avec un débit de 9600 bits par seconde, ainsi qu'à la transmission de messages vocaux, c'est à dire à la téléphonie.

L'établissement d'une communication téléphonique entre un abonné appelant et un abonné appelé, s'effectue par l'intermédiaire d'un ou plusieurs opérateurs, par exemple propriétaire ou exploitant d'un réseau de télécommunication vocale, et éventuellement par l'intermédiaire d'un site intermédiaire parfois appelé détaillant en communication ; cette appellation désigne généralement un intermédiaire qui achète à des conditions tarifaires privilégiées à un opérateur propriétaire d'un réseau public, des communications téléphoniques "en masse" pour les revendre "au détail" à des clients ou abonnés individuels.

Les détaillants en télécommunications (vocales notamment) proposent à leurs clients ou abonnés individuels des modes d'accès en communication (téléphoniques notamment) qui sont généralement des trois types suivants :
- un premier mode d'accès consiste pour le client ou abonné individuel à louer une liaison directe et permanente avec le détaillant en communications, qui facture son client (abonné individuel) en surveillant notamment le trafic (quantité) d'informations transitant sur la liaison louée ; ce mode d'accès permet un bon niveau de sécurité d'identification de l'abonné appelant ;
- un autre mode d'accès consiste à mettre à la disposition d'abonnés, un serveur vocal connecté à un réseau téléphonique commuté classique ; le serveur vocal permet à un abonné appelant le détaillant de communication, de s'identifier par son numéro de client ou de compte de facturation, éventuellement de s'authentifier par un numéro de code, et de composer le numéro du correspondant final demandé en utilisant les touches (à fréquences vocales) de son combiné téléphonique ; certains dispositifs permettent d'automatiser ces opérations et autorisent l'appelant à numéroter directement vers l'abonné désiré en préservant ainsi l'ergonomie d'appel ;
- un troisième mode d'accès par rappel automatique nécessite l'appel du client (ou abonné appelant) vers la société de rappel automatique connectée sur un réseau téléphonique commuté [RTCP ou RNIS] ; dans ce mode d'accès, l'abonné appelant raccroche son combiné après appel du détaillant et attend que ce détaillant (c'est à dire cette société de rappel automatique) ne le rappelle.

Ces différents modes d'accès comportent des inconvénients ; en effet, le coût d'une liaison directe louée nécessite, pour être rentable, une grande quantité de télécommunications et donc un trafic suffisamment important pour permettre aux clients individuels de bénéficier de prix inférieurs à ceux offerts par des opérateurs disponibles localement ; par ailleurs, l'accès au détaillant équipé d'un serveur vocal modifie les habitudes d'usage du réseau téléphonique puisque la numérotation à effectuer par l'abonné appelant est différente de la numérotation directe du plan de numérotage public qui est normalement utilisée en passant par l'opérateur du réseau ; en outre, ce mode d'accès n'offre pas un niveau suffisant de sécurité pour le détaillant en communication concernant l'identification de l'abonné appelant, dès lors que le numéro de compte et/ou de code du client appelant peuvent être subtilisés et utilisés par un tiers non autorisé ; dans sa variante automatisée, le serveur vocal est handicapé par la taxation, au détriment de l'abonné appelant ou du site intermédiaire si l'accès se fait via un numéro gratuit (N° Vert 0 800 en France) ou des deux si l'accès se fait via un numéro à taxation partagée (N° Azur 0 801 ou Indigo 0 802 en France), des appels inefficaces ou non-aboutis (occupation, non-réponse, saturation, etc...) puisqu'une communication ordinaire s'établit pour permettre, préalablement au message utile, l'échange des paramètres d'appels de l'abonné final demandé (signalisation dans la bande audio). Dans certains cas recensés récemment, les appels inefficaces représentent 10 à 15 % du budget des communications de l'abonné appelant empruntant le détaillant en communication installé sur le site intermédiaire ; dans le mode d'accès par rappel automatique de la part d'un détaillant raccordé à un réseau téléphonique commuté ou un réseau numérique à intégration de services, la procédure de rappel comporte un inconvénient important lié au fait notamment que l'appelant doit attendre le rappel qui est effectué par l'intermédiaire ou détaillant. Entretemps, l'appelant peut être appelé par un tiers ou les accès à l'installation de l'entreprise, dans le cas d'un PABX, être saturés.

La présente invention a pour objectif de proposer un mode d'accès amélioré à un détaillant (ou opérateur) en communication.

Un but de l'invention consiste plus particulièrement à proposer un mode d'accès pour un abonné appelant, désirant entrer en télécommunication (vocale notamment) avec un abonné appelé, par l'intermédiaire d'un détaillant ou site intermédiaire, d'une façon automatique et transparente pour l'abonné appelant, c'est à dire sans nécessiter que l'abonné appelant modifie ses habitudes d'usage des réseaux téléphoniques commutés.

Un objectif de l'invention consiste en outre à permettre d'assurer au détaillant en télécommunications d'obtenir un haut niveau de sécurité concernant l'identification des clients appelant.

Les réseaux numériques à intégration de services (RNIS) ont des caractéristiques délimitées par de nombreuses normes ISO, CCITT / ITU-T ; ces réseaux sont organisés en plusieurs canaux de transmission de type B et D et leurs protocoles correspondants ; les canaux B (mode circuit) sont dédiés principalement à la transmission des messages ou données à communiquer ; les canaux D (mode paquet) sont dédiés principalement à la transmission d'informations de signalisation nécessaires à la gestion des canaux B et à la fourniture de services supplémentaires ; les normes définissent également différents types d'interfaces - dont les interfaces notées T et celles notées E - définissant des points de référence permettant d'architecturer le réseau et d'interconnecter les équipements le constituant.

On connaît différents dispositifs automatiques de choix d'un opérateur de télécommunication pour minimiser le coût et/ou optimiser la qualité de la télécommunication :
- le brevet US 5.425.085 décrit un dispositif de déroutage (déviation) de télécommunication ; le dispositif décrit est spécifiquement prévu pour s'intercaler entre un terminal téléphonique analogique et un réseau analogique de type RTC (réseau téléphonique commuté) ;
- la demande internationale WO 88/07797 décrit un boîtier intercalé entre un terminal téléphonique et le réseau ; le boîtier est raccordé à un ordinateur ;
- la demande internationale WO 94/28683 décrit des circuits générateurs de signaux de prix et des circuits de sélection d'un opérateur de télécommunication en fonction du signal de prix ;

On connaît par ailleurs des systèmes de télécommunication dans lesquels, à un numéro abrégé ou générique d'un service (plan de numérotage privé) est substitué un numéro du plan public choisi dans une mémoire ou base de données :
- le brevet US 5.272.748 décrit un système de mise en communication téléphonique d'une cabine publique avec un serveur vocal d'information, ou bien avec un standard d'une compagnie de taxi (plan de numérotage privé) ;
- la demande de brevet EP 493 896 décrit un système de sélection du numéro d'appel d'un magasin proche du domicile de l'abonné appelant, pour l'établissement d'une communication à partir d'un numéro abrégé commun à plusieurs magasins (gamme de services de numéro unique tel le N° Vert 0 800 en France).

Aucun de ces documents ne décrit ou ne suggère de faire appel aux fonctions des réseaux RNIS, pour le déroutage d'une communication et pour l'établissement très rapide, peu coûteux et fiable d'une communication.

L'invention s'applique donc à un procédé de télécommunication entre un quelconque premier abonné - dit abonné appelant - et un quelconque troisième abonné - dit abonné appelé -, lesquels premier et troisième abonnés sont raccordés à un réseau commuté de télécommunication (automatique) par une liaison terminale de type analogique (RTC) ou numérique (RNIS), lequel réseau comporte un site - dit site intermédiaire - de commutation ; conformément à l'invention, le numéro d'appel noté Z dudit troisième abonné est transmis audit site intermédiaire par le canal D de signalisation du RNIS.

A cet effet, le site intermédiaire est muni d'une interface RNIS par laquelle il reçoit ledit numéro d'appel Z.

Selon un premier aspect de l'invention, il suffit donc d'équiper le site intermédiaire d'un ou plusieurs PABX-RNIS qui est (sont) ici utilisé(s) en tant que noeud(s) de transit alors qu'il(s) est (sont) généralement utilisé(s) pour desservir plusieurs terminaux situés sur un site privé commun ; un PABX a bien sûr une faible capacité comparativement aux grands commutateurs de téléphonie publique, mais a l'avantage d'être d'un prix très inférieur, notamment du fait que ce type de commutateur n'est pas doté de canaux de signalisation enrichie tels que le canal SS7 de l'ITU-T qu'on rencontre au sein des réseaux publics.

L'invention permet notamment à des sociétés disposant déjà de moyens de transmission, tels que des liaisons (à caractère régional, national ou international) par fibres optiques ou par faisceau hertzien notamment, telles que des sociétés de chemin de fer par exemple, de s'établir en tant qu'opérateurs ou détaillants en communication, avec un investissement limité au coût d'acquisition, de raccordement et de mise en service de PABX-RNIS.

A cet effet, le site intermédiaire du détaillant doit être raccordé à un central de télécommunication d'un réseau téléphonique commuté public, par une liaison RNIS ; ledit réseau téléphonique public étant caractérisé par sa faculté à desservir en partie terminale (ou boucle locale) l'appelant de numéro X ; le site intermédiaire correspond à un abonné du réseau national ou régional et un numéro d'abonné noté Y lui est donc évidemment attribué.

Lorsqu'un quelconque abonné appelant qui est raccordé au réseau de télécommunication automatique, souhaite établir une télécommunication avec un quelconque abonné appelé qui est raccordé au réseau de télécommunication automatique, il compose sur son terminal le numéro Z habituel et complet, c'est-à-dire le numéro (du plan de numérotage public considéré) qui est attribué à l'abonné appelé ; de préférence, l'abonné appelant compose un code (tel que un ou plusieurs chiffres) immédiatement suivi du ou suivant le numéro Z, ledit code constituant un code de choix de transit de la télécommunication par un site intermédiaire déterminé ; ainsi en France, le digit ou préfixe « ⌀ » est réservé à l'opérateur FRANCE TELECOM en charge du service universel, alors que les digits « 1, 2, 4, 6, 8, 9 » pourront être attribués à des opérateurs concurrents longue distance ; le numéro Z appelé, ainsi que l'éventuel code est adressé par le terminal au central de télécommunication auquel le terminal est raccordé ; le central de télécommunication recherche si une condition de déroutage (ou déviation) est remplie ; tel sera le cas lorsque le central détecte la présence dudit code de choix ; tel pourra également être le cas, en l'absence dudit code, lorsque le central de télécommunication, après consultation d'une base de données, constate que le numéro de client abonné appelant est répertorié dans la base comme correspondant à un abonné dont toutes les communications doivent être déviées vers un site intermédiaire déterminé.

Si la condition de déroutage est remplie, une demande de communication est effectuée à destination du numéro Y (du site intermédiaire) qui est ainsi substitué au numéro Z appelé ; le numéro Z éventuellement codé est transmis par le central au site intermédiaire, en utilisant un service paramétrable du canal D de la liaison RNIS reliant le central au site intermédiaire ; le site intermédiaire détecte (et le cas échéant décode) le numéro Z appelé ainsi transmis, et procède lui-même à une demande de télécommunication en sortie, à destination de l'abonné appelé Z ; lorsque l'abonné appelé est disponible, l'aboutement des deux communications est opéré aux différents noeuds du réseau, dont le noeud constitué par le site intermédiaire.

Ainsi, selon ce premier aspect (ou application), l'invention consiste en un procédé d'établissement d'une télécommunication entre un abonné appelant quelconque, de numéro d'appel X, et un abonné appelé final quelconque, de numéro d'appel Z, lesquels abonné appelant et abonné appelé sont connectés à un réseau de télécommunication automatique qui comporte un premier noeud de transit et un deuxième noeud de transit (lesquels premier et deuxième noeud de transit sont contrôlés et/ou appartiennent à deux entités - ou opérateurs - différents), caractérisé en ce que, dans le but de dévier (ou dérouter) ladite télécommunication dudit premier noeud audit deuxième noeud constituant un site intermédiaire (auquel est attribué un numéro d'appel Y), lesquels premier et deuxième noeud sont connectés par une liaison RNIS, on transmet dudit premier noeud audit deuxième noeud, ledit numéro Z de l'abonné appelé final, par le canal D de signalisation de la liaison RNIS ; de préférence, on substitue au niveau dudit premier noeud de transit, le numéro d'appel Y dudit deuxième noeud ou site intermédiaire qui est choisi en fonction d'un code A de choix émis par l'abonné appelant, au numéro Z de l'abonné appelé final.

Dans cette première application de l'invention, l'abonné appelant peut être relié au réseau par une liaison terminale analogique ou bien par une liaison terminale numérique.

Dans une deuxième application et selon un deuxième aspect, l'invention propose d'utiliser et mettre en oeuvre un procédé de télécommunication entre un premier abonné, de numéro d'appel (noté X), qui est raccordé à un réseau RNIS, et un troisième abonné (ou abonné appelé ou abonné final), dont le numéro d'appel téléphonique est noté Z (et qui est ou non raccordé audit réseau RNIS), dans lequel on substitue automatiquement un numéro (noté Y) d'un deuxième abonné (ou site) intermédiaire qui est raccordé audit réseau RNIS, audit numéro Z de l'abonné appelé final, et on transmet audit deuxième abonné (ou site intermédiaire appelé) ledit numéro Z de l'abonné appelé final par le canal D du réseau RNIS par un des téléservices optionnels pour l'établissement d'un appel (exemple : sous-adresse ou signalisation d'usager à usager).

Dans cette deuxième application :
a - un abonné appelant compose sur le clavier d'un terminal, le numéro Z d'un abonné appelé auquel est destiné un message M, lequel terminal est raccordé à un réseau RNIS de télécommunication par un interface de type S,
b - le numéro Z de l'abonné appelé est de préférence codé par un moyen de codage et transmis, ainsi que le message M, a un premier site intermédiaire de commutation ou détaillant,
c - le premier site intermédiaire décode (ou détecte) par un moyen de décodage le numéro Z d'appelé et transmet le message M à l'abonné appelé, généralement par un deuxième site intermédiaire ou opérateur ; le numéro X de l'appelant est transmis directement au premier site intermédiaire par le canal D de signalisation du réseau RNIS, par le service standard d'identification de l'appelant des RNIS.

Selon des modes de réalisation préférentiels de l'invention :
- les moyens de codage du numéro Z de l'abonné appelé sont entièrement numériques, et peuvent être intégrés à l'interface (de préférence sous forme de logiciel) du terminal de l'abonné appelant, dans la deuxième application ; dans la première application, les moyens de codage du numéro Z sont intégrés au central de télécommunication du réseau qui est relié au site intermédiaire par la liaison RNIS ;
- un code A (alpha) d'identification (de choix) du premier et/ou du deuxième intermédiaire, est choisi parmi une liste prédéterminée de codes de choix de (premier et/ou deuxième) intermédiaires ; le choix est fait par l'utilisateur appelant qui compose sur le clavier de son terminal le code de choix, ou bien automatiquement par l'interface intégrée au terminal.

Dans le cas d'une communication téléphonique, le message M est un message vocal.

Conformément à l'invention, on utilise l'un ou l'autre des deux compléments de services (ou champs) du canal D du RNIS, qui sont paramétrables depuis un terminal d'abonné approprié (interface S), ainsi bien sûr que par le central de télécommunication du réseau qui est relié par RNIS au site intermédiaire : le service de sous adresse ou bien le service de signalisation d'usager à usager.

Selon des modes préférentiels de mise en oeuvre des procédés selon l'invention :
- préalablement à la transmission du numéro Z de l'abonné appelé final, on calcule la longueur L du numéro Z et on transmet une information représentative de ladite longueur L préalablement à la transmission dudit numéro Z ;
- on établit la communication entre le premier abonné appelant et le troisième abonné final par l'intermédiaire de l'abonné intermédiaire seulement après avoir vérifié que le numéro de l'abonné appelé final est disponible.

L'invention consiste également à procurer un terminal (et/ou installation d'abonné comportant plusieurs terminaux et au moins un commutateur privé) de télécommunication numérique, notamment un terminal téléphonique, qui comporte :
- dans le cas d'un terminal téléphonique : un module d'interface avec un combiné téléphonique et par exemple un haut parleur,
- un module d'interface avec le réseau RNIS,
- un clavier ou unité d'entrée, et de préférence un afficheur ou unité d'affichage,
- un module d'interface utilisateur qui est relié auxdites unités d'entrée et d'affichage,
- un module principal de traitement ou de commande du terminal qui est relié audit module d'interface utilisateur, audit module d'interface avec le RNIS et audit module d'interface avec le combiné, par des liaisons et qui contrôle le fonctionnement du terminal,
lequel terminal comporte un moyen de traitement et une unité de mémoire contenant un numéro Y d'appel d'un site intermédiaire ou second abonné, lequel moyen de traitement comporte un moyen de substitution d'un numéro Z demandé par l'utilisateur par ledit numéro Y enregistré dans ladite unité de mémoire ; de préférence lesdits moyens de traitement comportent un moyen de codage ou de transformation (par division ou découpage notamment) dudit numéro Z d'appelé final demandé, en un ou plusieurs messages, lequel terminal comporte de préférence des moyens de calcul de la longueur du numéro d'appelé final demandé par l'utilisateur.

L'invention procure aussi un système de télécommunication entre un abonné appelant de numéro X et un abonné appelé final de numéro Z dans lequel l'abonné appelant utilise un terminal selon l'invention qui est raccordé, ainsi qu'un site intermédiaire, à un réseau RNIS, et dans lequel le site intermédiaire comporte des moyens de détection (et/ou de décodage) du numéro appelé final transmis par un service paramétrable (exemples : sous-adresse et signalisation d'usager à usager) du canal D de signalisation du réseau RNIS auquel il est connecté.

Dans un système de télécommunications selon la deuxième application de l'invention, les terminaux ou sites appelants sont chacun équipé d'un dispositif de substitution et/ou de codage du numéro appelé, qui est également désigné ci-après par "traducteur de numérotation" (ci-après TDN) ; ce dispositif prend en charge la demande de communication vocale du client appelant et la transmet automatiquement au site intermédiaire ou détaillant en communication ; le serveur ou dispositif de commutation équipant ce site intermédiaire comporte un dispositif de décodage et/ou de reconnaissance du numéro de l'appelé final qui a été codé par le terminal de l'abonné appelant, lequel dispositif de décodage et/ou détection est désigné ci-après par l'appellation "gestionnaire d'appel indirect" (ci-après GAI) ; ce dispositif récupère la demande de communication de l'abonné appelant pour la restituer aux organes de commande du ou des accès en sortie du site intermédiaire (détaillant en communications) et réaliser l'aboutement des deux communications client/détaillant d'une part, et détaillant/opérateur ou détaillant/abonné appelé final d'autre part.

La deuxième application de l'invention permet également à un opérateur propriétaire ou exploitant d'un premier réseau (par exemple d'un premier territoire national), de mettre en place et de raccorder à un deuxième réseau (par exemple d'un deuxième territoire national), un site intermédiaire équipé des moyens de décodage susvisés, afin de s'établir sur ledit deuxième territoire national en tant que détaillant en télécommunication.

Les nombreux avantages procurés par l'invention seront mieux compris au travers de la description suivante qui se réfère aux dessins annexés, qui illustrent sans aucun caractère limitatif des modes préférentiels de réalisation des procédés et dispositifs selon l'invention.

Sauf indication contraire, des éléments fonctionnellement et/ou structurellement identiques ou similaires sont repérés par des nombres ou des lettres identiques dans les différentes figures.

La figure 1 illustre schématiquement les composants d'un système de télécommunication selon la deuxième application de l'invention.

La figure 2 illustre schématiquement les composants d'un terminal téléphonique selon la deuxième application de l'invention.

La figure 3 illustre un système de communication selon la première application de l'invention.

La figure 4 illustre schématiquement les étapes de fonctionnement du dispositif TDN.

La figure 5 illustre schématiquement les étapes de fonctionnement du dispositif GAI.

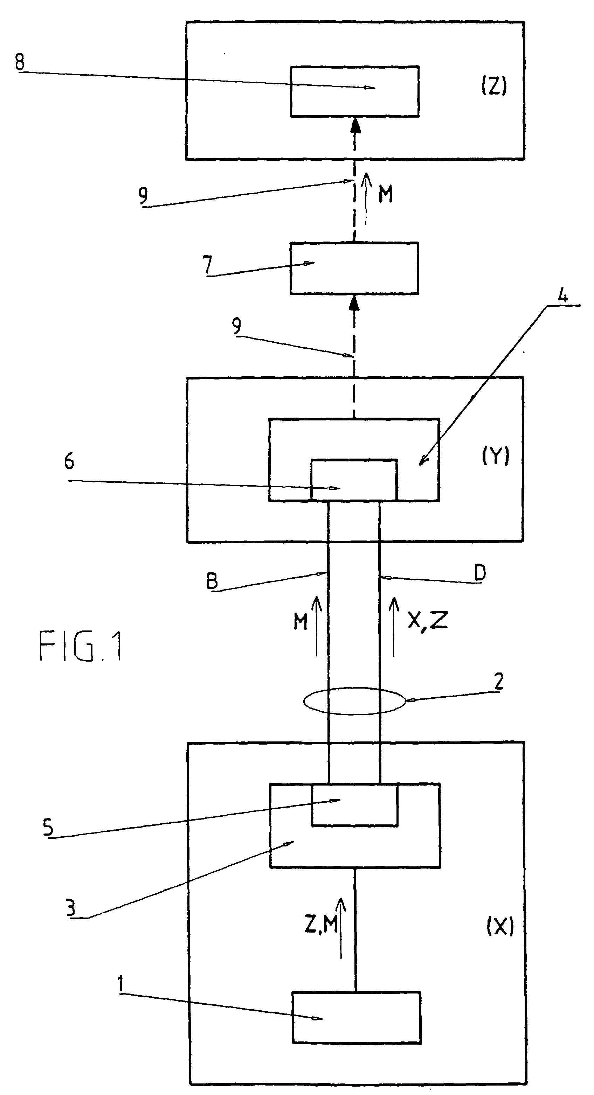

Trois variantes de réalisation de l'invention sont décrites plus en détail ci-après ; une première variante consiste à dérouter une communication d'un premier noeud de transit (d'un premier opérateur) tel qu'un central téléphonique à un deuxième noeud de transit (appartenant à un deuxième opérateur) constituant un site intermédiaire, lesquels premier et deuxième noeud de transit sont connectés par une liaison RNIS, dont le canal D sert à transmettre du premier noeud au second noeud, le numéro Z de l'abonné appelé final ; deux variantes de la deuxième application de l'invention utilisent la transmission du numéro Z de l'abonné appelé final (repère 8, figure 1) par le canal D de signalisation du réseau RNIS (repère 2) auquel l'abonné appelant ainsi que le site intermédiaire 4 sont raccordés.

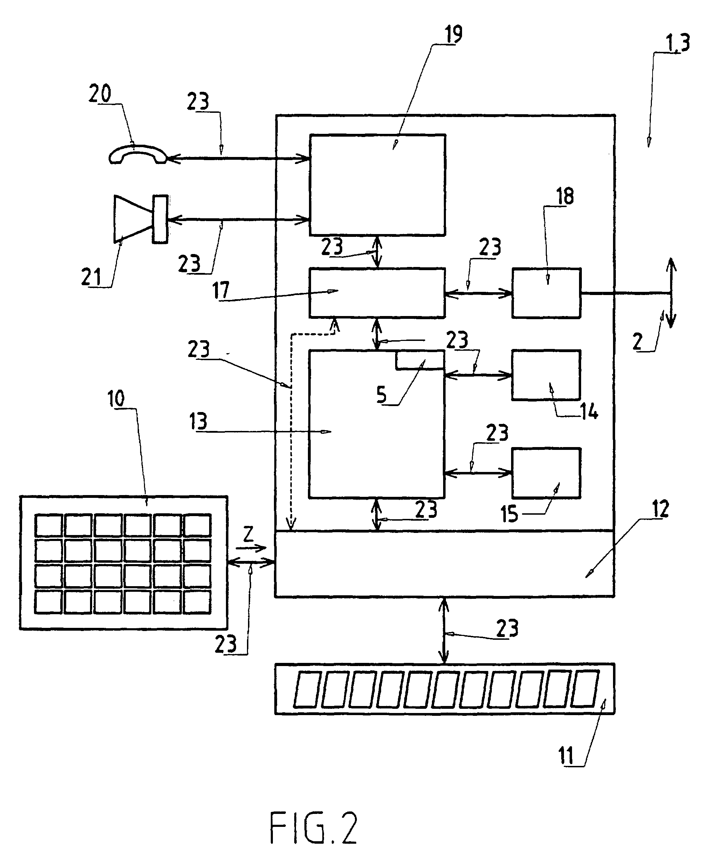

L'utilisation de l'invention sera totalement "transparente" pour l'utilisateur, c'est à dire sans changer aucunement ses habitudes d'usage, dans le cas où le même site intermédiaire est systématiquement utilisé, et vers lequel tous les appels sont déroutés, auquel cas l'utilisateur pourra seulement activer ou inhiber l'utilisation de cette fonction de déroutage ou de substitution d'appel, par exemple en utilisant une touche de fonction de son terminal dédiée à ce choix (binaire) ; dans d'autres modes de réalisation de l'invention, l'utilisateur peut se voir offrir le choix du déroutage par un intermédiaire choisi parmi une liste d'intermédiaires prédéterminés dont les numéros d'appel et des données les concernant peuvent être enregistrés dans une zone mémoire (repère 14, figure 2) ou fichier du terminal ou de l'interface du dispositif équipant le site appelant ; auquel cas l'utilisateur pourra par exemple choisir l'intermédiaire qu'il souhaite utiliser pour dérouter sa communication en numérotant ou en introduisant au clavier un code représentatif de son choix d'un intermédiaire parmi ladite liste d'intermédiaires prédéterminée.

### PREMIERE VARIANTE DE REALISATION

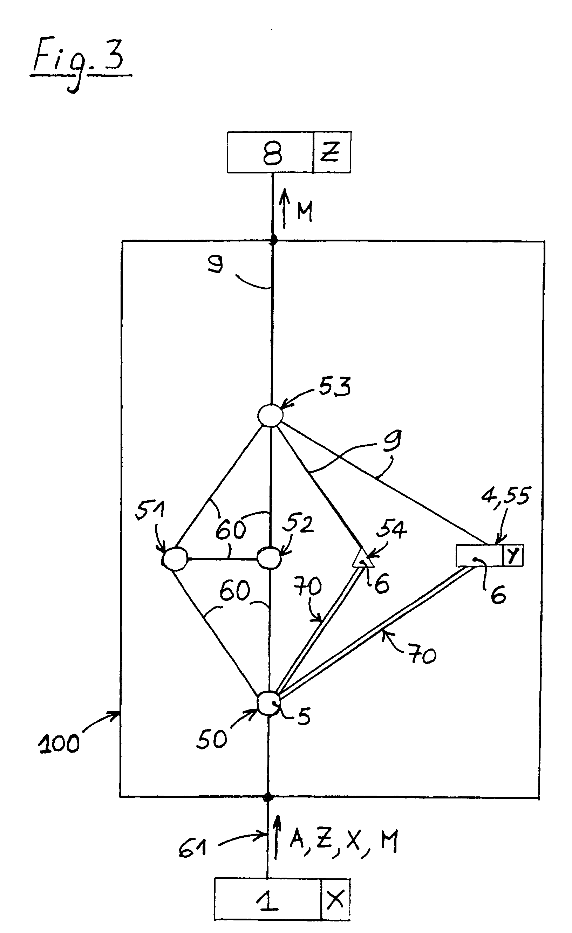

Par référence à la figure 3, le réseau 100 de télécommunication public auquel sont raccordés l'abonné appelant 1 et l'abonné appelé 8, comporte plusieurs noeuds de transit interconnectés :
- quatre noeuds 50, 51, 52, 53 connectés par des liaisons 60 et qui appartiennent à un premier opérateur,
- un noeud 54 respectivement connecté aux noeuds 50 et 53 par une liaison RNIS 70 et par une liaison 9, et qui appartient à un deuxième opérateur,
- un noeud 55 également connecté au noeud 50 par une liaison RNIS 70 et au noeud 53 par une liaison 9, et qui appartient à un troisième opérateur.

Suivant que l'abonné appelant souhaite que sa communication transite par le noeud 54 ou par le noeud 55, il composera un code A de choix correspondant (par exemple « 1 » pour choisir le noeud 54 du deuxième opérateur, et « 2 » pour choisir le noeud 55 du troisième opérateur).

A cet effet, le code A est transmis par le terminal 1 appelant (ainsi que le numéro Z appelé) par la liaison terminale 61 au central téléphonique 50 ; après détection par le module TDN (repéré 5) du central 50 du code de choix A qui est dans l'exemple égal à 2, le central 50 établit une demande de communication avec le noeud 55 constituant le site 4 dont le numéro d'abonné est Y, transmet au site intermédiaire 4 (ou noeud 55), le numéro Z appelé final, par le canal D de la liaison RNIS entre le central 50 et le noeud 55, comme décrit plus en détail dans les deuxième et troisième variantes ci-après.

Après établissement d'une communication passant par les noeuds 50, 55 et 53, le message M est transmis par les liaisons correspondantes, de l'appelant 1 à l'appelé 8.

Dans les réseaux publics modernes, le présent dispositif peut pleinement tirer parti d'une architecture de type Réseau Intelligent. Dans ce type d'architecture en effet, les noeuds de commutations et les autres ressources du réseau sont pilotés par un ou des ordinateurs éventuellement distants (baptisés Point de Commande de Service ou PCS dans le réseau de FRANCE TELECOM ; un PCS particulier, baptisé PCS-Réseau ou PCS-R, est chargé de piloter en temps réel le déroulement d'un type de service donné ; le PCS-R supporte le logiciel correspondant à la logique du service en question) via de préférence les canaux sémaphores N° 7 de l'ITU-T et sous réserve de l'adaptation en conséquence des centraux téléphoniques publics ou des autres ressources. Dans une architecture Réseau Intelligent appliquée au présent dispositif, le commutateur 50 joue le rôle de Commutateur d'Accès au Service (CAS : déclenche le traitement de l'appel par le PCS-Réseau). Le PCS -R pilote alors le processus de substitution du numéro Z par le numéro Y et l'insertion ainsi que le codage du numéro Z dans un complément de service approprié au sein du canal D.

### DEUXIEME ET TROISIEME VARIANTES DE REALISATION

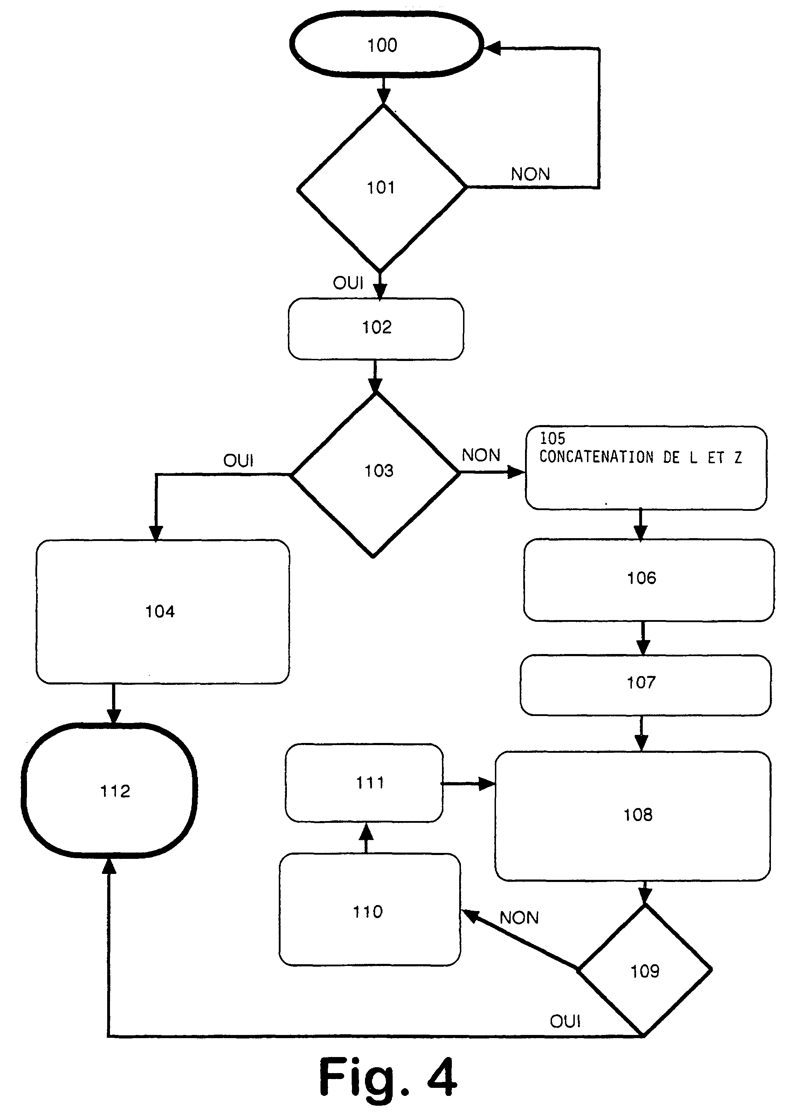

Selon ces deux variantes de réalisation, lorsque l'abonné appelant décroche le combiné (repère 20, figure 2) téléphonique du terminal 1, le TDN du terminal 1 attend (étape 100, figure 4) la composition du numéro final Z demandé.

Lorsque celui-ci est complètement composé (test 101), le TDN demande (étape 104) une communication RNIS avec identification de l'appelant à destination du détaillant 4 en communication, dont le numéro d'appel Y est connu du TDN. Cet établissement de communication utilise des services standards du canal D de signalisation des RNIS.

Le TDN injecte, sous une forme codée prédéfinie et connue du GAI, dans le canal D, le numéro Z du correspondant final demandé par le client individuel appelant.

Le détaillant dispose alors de toutes les informations lui permettant de donner suite à la demande du client individuel : son identité et le numéro du correspondant final.

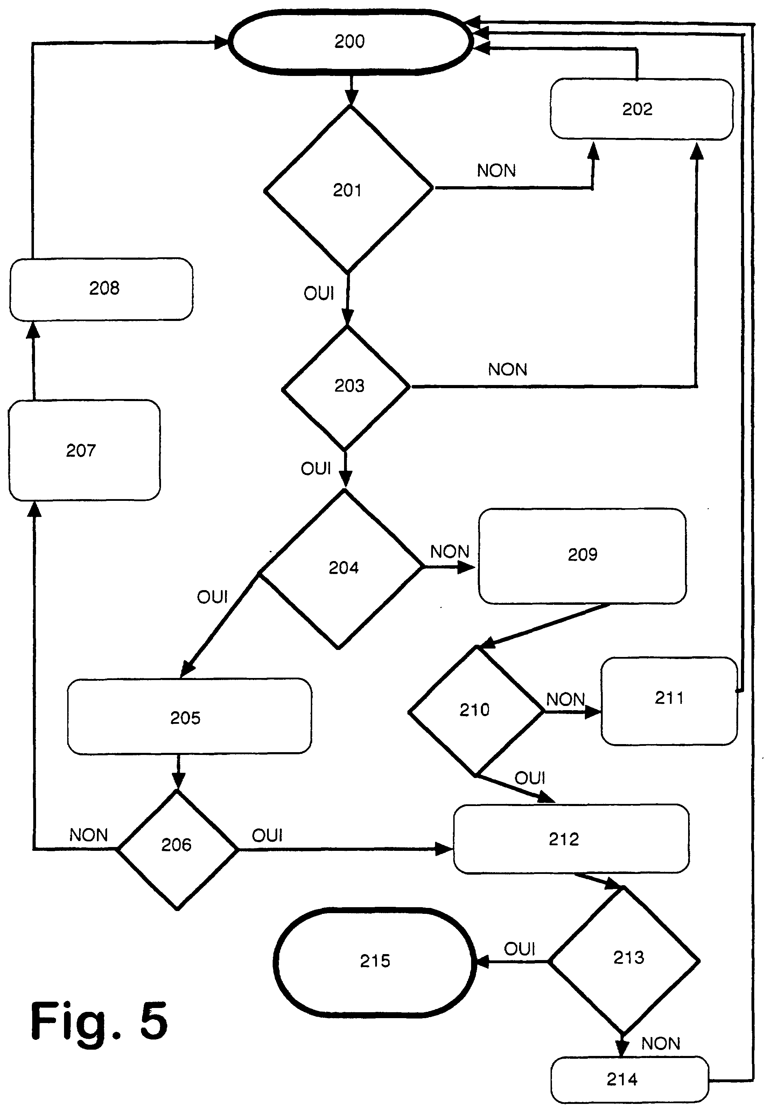

A réception (étape 200, figure 5) d'une demande de communication RNIS coté détaillant, le GAI équipant le site intermédiaire 4 vérifie (test 201) que celle-ci est bien effectuée en mode identification de l'appelant ; dans la négative, le détaillant 4 de donne pas suite à la demande (étape 202) ; dans l'affirmative, le GAI demande la comparaison (test 203) du numéro appelant avec la liste des clients habilités du détaillant.

Si le numéro X appelant est bien celui d'un client habilité, le GAI décide de poursuivre le processus.

Lorsque le numéro Z sous forme codée ou non est parvenu au GAI, celui-ci le décode (étapes 209 et 212) et le transmet aux organes de commande des accès de sortie du détaillant ; si la communication de Y vers Z est établie (test 213), le GAI demande l'aboutement (étape 215) des communications client/détaillant et détaillant/opérateur 7 (ou bien détaillant 4/appelé 8) ; sinon, le GAI restitue la cause (étape 214) vers X.

L'utilisation des deuxième ou troisième variantes de mise en oeuvre de l'invention dans lesquelles on utilise le canal D de signalisation du RNIS pour transmettre des messages représentatifs du numéro Z de l'abonné appelé final, de l'abonné appelant jusqu'au site intermédiaire, présente l'avantage que l'ouverture de la communication entre l'abonné appelant et l'intermédiaire, par le canal B de parole du réseau RNIS (qui déclenche le démarrage de la taxation de l'abonné appelant), s'effectue seulement si l'abonné final peut être joint, c'est à dire après vérification de la possibilité de communication par le dispositif installé sur le site intermédiaire. Cela est valable pour les RNIS ne facturant pas les compléments de service paramétrables sur le canal D (tels que la sous-adresse ou la signalisation d'usager à usager).

### DEUXIEME VARIANTE DE REALISATION

Ce mode de réalisation utilise le complément de service « sous-adresse » du RNIS pour véhiculer le numéro Z de l'appelé final du demandeur X vers le premier intermédiaire Y.

Les normes internationales définissent le complément de service « sous-adresse ».

Il s'agit d'un champ de 40 chiffres décimaux maximum complétant le numéro d'appelé du plan de numérotage public. Cette taille permet actuellement de transporter tout numéro de téléphone du plan de numérotage public de tous les pays.

Il suffit donc au TDN d'utiliser ce complément de service pour véhiculer jusqu'au détaillant en communications le numéro Z de l'appelé final.

Cette information nécessaire à l'établissement d'une communication entre le demandeur et l'appelé final transite donc via le canal D (dans le message d'établissement d'une communication RNIS) ; l'utilisation du canal B du RNIS nécessiterait l'ouverture d'une communication vocale entre X et Y pour transporter le numéro Z sans savoir si l'appelé Z va décrocher ; ainsi, le demandeur serait taxé à chaque tentative de communication, y compris pour les tentatives infructueuses ou inefficaces. Cet inconvénient n'existe pas dans les deuxième et troisième variantes de l'invention (ainsi en France, l'utilisation de la sous-adresse est gratuite) ; une autre conséquence importante de l'utilisation du canal D consiste en une fiabilité plus grande de la transmission du numéro Z puisque le canal B est très nettement plus sensible aux bruits de toutes sortes que le canal D qui n'est dédié qu'aux transports de signaux numériques via des protocoles téléinformatiques fiabilisés.

Dans les réalisations nationales des RNIS, le champ de la sous-adresse est généralement limité à un nombre de chiffres décimaux inférieur à 40 ; par exemple, la sous-adresse est limitée en France à 4 chiffres décimaux seulement. Cette limite est alors insuffisante pour transmettre tout numéro du plan de numérotage public mondial. Dans de tels cas, le deuxième mode de réalisation s'adapte aux contraintes de taille de la sous-adresse de la façon suivante.

Soit Nsa (Nsa>0) le nombre maximal de chiffres décimaux que peut contenir la sous-adresse d'un RNIS donné.

Le dispositif du terminal appelant utilise plusieurs demandes d'établissement de communication successives pour transporter jusqu'au détaillant la totalité du numéro de l'abonné appelé. Un dispositif analogue (complémentaire) côté détaillant n'établit la communication que lorsque la totalité de ce numéro a été reçue. De la sorte, on évite le comptage des taxes téléphoniques relatif à une communication établie dans les RNIS où l'utilisation de la sous-adresse est gratuite (exemple : France).

A titre d'exemple, les deux premiers chiffres de la sous-adresse du premier message d'établissement de communication représentent la longueur (exprimée par exemple en nombre de chiffres décimaux et par exemple comprise entre 1 et 99) du numéro de l'appelé final. Ainsi, le dispositif analogue côté détaillant sait au bout de combien de tentatives d'établissement il doit établir la communication. Il s'agit d'un codage voisin du codage normalisé BER ("Basic Encoded Rules") utilisé dans les couches hautes du modèle OSI (Recommandation X209 de l'ITU-T (International Telecommunication Union ou ex-CCITT : Comité Consultatif International du Téléphone et du Télégraphe) ou norme ISO (International Standard Organization ou Organisation Internationale de Standardisation) 8825). Dans ce dernier, on a un codage (Type, Longueur, Valeur), alors qu'ici, puisqu'on a un seul type de valeur à coder (numéro de téléphone), un codage du type (Longueur,Valeur) est suffisant.

Si Nte est le nombre de tentatives d'établissement de communication, si L est le nombre de chiffres décimaux du numéro Z de l'appelé final (c'est à dire sa longueur) et si E (n) désigne la partie entière de l'entier n, on a alors Nte=E([L+1]/Nsa)+1. Le paramètre L est passé en premier au dispositif côté premier intermédiaire de manière à lui permettre de calculer Nte. Pour toutes les demandes d'établissement de communication émanant d'un même demandeur X (test 204), sauf la dernière (Nte^{ième}) selon le test 206, le GAI demande le renvoi (étape 207 ou 211) d'un acquittement négatif (libération) à la demande d'établissement afin de couper la communication, ce qui permet (après attente 208) l'enchaînement très rapide (par utilisation exclusive du canal D) des Nte demandes d'établissement successives.

L'utilisation du service d'identification de l'appelant des RNIS est indispensable pour acheminer Z vers le premier intermédiaire car sinon, il pourrait y avoir apparition d'ambiguïtés. En effet, deux demandeurs différents qui désireraient joindre Y au même moment ne pourraient être distingués par le GAI. Ce dernier reconstituerait un numéro d'appelé Z' final à partir des fragments de numéros présents dans les sous-adresses remplies par les deux demandeurs. L'identification de l'appelant permet à contrario d'associer les sous-adresses reçues à une même origine.

Prenons comme exemple un numéro Z appelé comprenant neuf chiffres (L=9; prenons Z = 9 87 65 43 21) et une longueur maximale de sous-adresse égale à quatre chiffres (Nsa=4). Il est nécessaire côté TDN d'initier trois communications téléphoniques successives. Les deux premières n'aboutissent pas alors que la troisième aboutit et autorise éventuellement (par exemple s'il n'y a pas d'occupation au numéro Z, voir ci-dessus) l'ouverture du canal B permettant la communication vocale et le démarrage de sa taxation.

Dans cet exemple, la première communication téléphonique de X vers Y contient la sous-adresse (0,9,9,8). Les deux premiers chiffres représentent la longueur du numéro demandé Z, c'est-à-dire 09 ici. Les deux derniers chiffres sont les deux premiers "digits" (chiffres décimaux) du numéro Z.

La seconde communication téléphonique de X vers Y contient la sous-adresse (7,6,5,4).

La troisième communication téléphonique de X vers Y contient la sous-adresse (3,2,1).

Le mécanisme ainsi décrit est parfaitement adapté aux installations téléphoniques RNIS gérant la Sélection Directe à l'Arrivée (ou SDA : un numéro X par poste téléphonique interne). Pour les installations téléphoniques qui ne gèrent pas la SDA, des postes téléphoniques internes différents sont "vus" du RNIS comme dotés d'un même et unique numéro X. Il en résulte l'apparition d'ambiguïtés si deux postes internes appellent le premier intermédiaire simultanément. En effet, toutes les demandes d'établissement de communications sembleront venir d'un même numéro X et le premier intermédiaire ne pourra pas distinguer une demande d'un premier poste AA de celle d'un second poste BB du même site appelant. D'où des erreurs de reconstruction du numéro Z si L+2 est supérieur strictement à Nsa. Ces ambiguïtés peuvent être levées en modifiant le codage de la sous-adresse tel que décrit précédemment. Il suffit par exemple alors d'injecter comme premier chiffre de la sous-adresse de toutes les demandes d'établissement d'un même poste interne un chiffre tiré au sort entre 0 et 9. Dans ces conditions, le nombre de demandes d'établissement nécessaires avant d'établir réellement la communication téléphonique utile augmente, mais jusqu'à dix postes internes distincts peuvent appeler le premier intermédiaire simultanément. Dans l'exemple précédent, on trouve Nte= 4 demandes d'établissement (pour un numéro de neuf digits et une sous-adresse de quatre chiffres au maximum) au lieu de 3.

Les moyens de codage du numéro appelé, en messages successifs en vue de leur transmission par la sous-adresse, peuvent être librement choisis dans l'arsenal des techniques de codage. La méthode de codage« directe » décrite ci-avant n'est pas la seule possible.

Si un autocommutateur privé (désigné par PABX) est choisi en tant qu'interface (3) (figure 1), le mécanisme de traitement et de codage du numéro appelé peut être alors implanté sous forme logicielle dans l'Unité de Commande (UC) du PABX. Ce mécanisme est intégré à un bloc fonctionnel dénommé TDN (ou codeur repéré 5, figures 1 et 2).

Un PABX est essentiellement composé de deux blocs fonctionnels :
- l'Unité de Commande qui gère la numérotation, la facturation et les fonctions téléphoniques avancées, éventuellement au moyen du protocole D;
- le Réseau de Connexion (RCX) qui fait le lien entre les lignes entrantes et sortantes, voire entre lignes de même nature (exemple : deux lignes internes pour une communication dans un même site ou deux lignes sortantes dans la fonction d'aboutement de deux communications externes).

Sur sollicitation d'un poste dédié, l'UC mémorise le numéro demandé final Z et sa longueur L (exprimée en nombre de chiffres) qu'elle calcule (étape 102) comme explicité ci-avant.

Si Nsa est la longueur maximale de la sous-adresse et si (test 103) Nsa est inférieure à (L+2), le numéro Z est découpé (étape 106) en morceaux : les (Nsa-2) premiers digits, puis les Nsa suivants, etc... jusqu'à ce que tous les digits de Z aient été utilisés.

L'UC demande alors une communication téléphonique avec identification du demandeur à destination du premier intermédiaire et en injectant (étapes 107 et 108) dans le champ de sous-adresse :
- la longueur L du numéro Z (en nombre de chiffres);
- puis les (Nsa-2) premiers digits du numéro Z.

Cette demande est acquittée par une libération (étape 110) de la part du GAI.

L'UC demande alors une nouvelle communication identique à la première, mais en utilisant (étape 111 et 108) les Nsa digits suivants de Z en tant que sous-adresse. Cette nouvelle demande est acquittée par une libération.

Ce processus itératif se poursuit jusqu'à ce que (test 109) tous les chiffres de Z aient été utilisés. La dernière itération n'est pas acquittée par une libération : le GAI temporise, dans les limites permises par le RNIS utilisé (timeout), pendant l'attente (étape 112) de l'établissement de la communication de Y vers Z.

Le dispositif analogue côté premier intermédiaire (dénommé GAI) peut alors autoriser l'établissement de la communication sur le canal B ce qui permet la communication vocale avec le correspondant final (de numéro Z) en supposant qu'une communication vocale (RNIS, RTC, par Liaison Louée [transmission intermédiaire] ou par tout autre moyen) a été établie entre le premier intermédiaire et ce correspondant final (aboutement de deux communications vocales).

Avec ce mécanisme, une seule tentative de communication est possible à un instant donné pour les installations multi-postes non dotées de la SDA. Dans de tels cas particuliers, le TDN peut mémoriser toute demande concurrente d'un autre poste téléphonique interne (du même site appelant) à destination du premier intermédiaire. Lorsque la demande de communication indirecte en cours est satisfaite (connexion, communication) ou rejetée (échec pour joindre Z) par le premier intermédiaire, la suivante en attente peut être traitée par le TDN. L'utilisation du canal D du réseau numérique pour toutes ces phases d'établissement de communication permet de garantir des temps de cycle très courts. L'autre méthode, non pourvue de SDA, consiste en l'insertion, dans le codage du numéro Z, d'un chiffre, décimal par exemple, représentatif du poste interne.

Les moyens techniques constituant cette deuxième variante de réalisation peuvent également être implantés dans des terminaux téléphoniques RNIS.

Ceux-ci sont habituellement constitués de trois blocs fonctionnels suivants (voir figure 2) :
- le module 18 de gestion de l'interface S (interface usager des RNIS) du réseau 2 ;
- le module 19 chargé des fonctions téléphoniques et acoustiques : codage et décodage des signaux de paroles reçus de et/ou émis vers un combiné 20 et éventuellement un haut parleur 21 (conversions numérique/analogique), génération de certains signaux acoustiques de signalisation des réseaux analogiques;
- le module 12 de dialogue usager-terminal : les habituelles touches des postes analogiques sont complétées par des touches de fonction permettant d'activer les compléments de service des RNIS ou d'accéder aux fonctions de téléphonie enrichie d'un PABX.

A ces trois modules vient s'ajouter le module 17 de gestion des communications qui pilote l'ensemble ; ces modules et les périphériques (unités) d'entrée sortie (clavier 10 et afficheur 11) ainsi que les transducteurs 20, 21 sont reliés par des liaisons 23.

Dans ces conditions, le TDN peut être implanté sous forme d'un nouveau module 13 de traitement situé entre l'interface 12 de dialogue usager-terminal et le module 17 de gestion des communications. Sa tâche consiste alors successivement à :
- substituer au numéro Z demandé (composé au clavier 10) via l'interface 12 de dialogue usager-terminal, le numéro Y du premier intermédiaire;
- calculer la longueur de ce numéro Z et en déduire le nombre de tentatives d'établissement nécessaires (Nte) selon l'algorithme donné ci-avant ;
- demander au module 17 de gestion des communications l'établissement de communications (par l'interface 18) avec identification de l'appelant à destination du premier intermédiaire et en remplissant la sous-adresse comme décrit plus haut de manière à transporter (éventuellement par parties successives) l'intégralité du numéro Z.

Le GAI ou décodeur (repéré 6 figure 1) peut être implanté sous forme logicielle sur un PABX RNIS. Si ce dernier supporte la fonction d'aboutement automatique de communication, le PABX peut alors jouer le rôle d'organe de commande des accès au réseau 9 (RTC, RNIS, liaison louée ou autre) en sortie du détaillant 4, et peut donc servir d'interface aux réseaux téléphoniques de sortie qui permettent d'accéder au correspondant final demandé au numéro Z.

Le logiciel implanté dans le GAI doit, lors de la première demande d'établissement du demandeur au numéro X, lire la sous-adresse. Les deux premiers chiffres sont lus en premier car ils donnent la longueur du numéro Z, ce qui permet, connaissant la longueur maximale de la sous-adresse Nsa, de déterminer le nombre Nte de tentatives d'établissement d'appels successives qui émanent de X (voir ci-avant).

Le reste de la sous-adresse est mémorisé en tant que premiers digits de Z.

Si Nsa (test 210) est inférieur à (L+2), alors la GAI doit attendre les demandes d'établissement d'appel suivantes de X pour compléter le numéro Z. Le GAI ne donne donc pas suite (libération) aux demandes d'établissement d'appel de X tant que Z n'est pas connu dans sa totalité.

Lorsque Z est complètement connu (Nte^{ième} demande d'établissement), le GAI demande l'ouverture du canal B pour permettre la communication vocale si certaines conditions sont satisfaites. Ces conditions sont :
- absence de signal d'occupation de l'abonné Z (si RTC);
- décrochage de l'abonné Z avant une durée (Tmax) correspondant à la durée maximale avant laquelle une demande d'établissement d'une communication RNIS doit être acquittée (libération ou connexion).

Ce dernier mécanisme permet d'éviter à l'utilisateur X d'être imputé d'une communication RNIS vers le premier intermédiaire s'il ne peut joindre Z.

Le protocole de communication comporte 4 étapes essentielles :
Etape 1 : Préparation des demandes d'établissement sur le TDN ;
   Le TDN construit la ou les demandes (paramètre Nte décrit plus haut) d'établissement de communications à destination du premier intermédiaire : substitution du numéro de premier intermédiaire au numéro Z demandé et inclusion du numéro Z dans un ou plusieurs champs de sous-adresse.
Etape 2 : Du TDN vers le GAI (de X vers Y);
   Le TDN demande une communication RNIS avec les caractéristiques suivantes :
   a/ identification de l'appelant (numéro X);
   b/ l'appelé est le premier intermédiaire (numéro Y);
   c/ sous-adresse contenant tout ou partie du numéro Z.

   Si Nte (Nte>1) demandes successives d'établissement de communication sont nécessaires du fait d'une longueur de sous-adresse insuffisante pour véhiculer l'intégralité du numéro Z, le GAI ne donne pas suite (libération) aux (Nte-l) premières demandes d'établissement (qu'il identifie grâce au numéro d'appelant X dont il a connaissance [caractéristique a/ ci-dessus]).
   Lorsque les Nte demandes d'établissement de communication provenant de la même origine sont reçues, le GAI dispose de toutes les informations pour établir une communication du premier abonné X vers l'abonné au numéro Z.
Etape 3 : Reconstruction du numéro Z ;
   Le GAI dispose du numéro Z dans son intégralité, qu'il reconstruit au besoin par concaténation des sous-adresses successivement reçues lorsque la longueur maximale de la sous-adresse sur le RNIS utilisé ne permet pas de véhiculer en une seule demande d'établissement la totalité du numéro Z.
Etape 4 : établissement d'une communication avec Z d'une part et l'origine X d'autre part ;
   Le GAI demande alors une communication vocale entre l'intermédiaire et l'abonné au numéro Z.

Si l'abonné Z est occupé (cas du RTC), le GAI répercute immédiatement l'information d'occupation à l'origine X via le message approprié du protocole D (libération).

Si l'abonné Z peut être joint, deux cas peuvent se produire :
- l'abonné Z décroche avant une durée notée Tmax inférieure strictement à la durée maximale avant laquelle la dernière demande d'établissement de communication de X vers l'intermédiaire doit être acquittée via le protocole D (libération ou connexion de communication) sur le RNIS utilisé de X vers Y. Dans ces conditions, les deux communications vocales de X vers Y d'une part et de Y vers Z d'autre part sont aboutées afin de permettre une communication de bout en bout de X vers Z. Le processus d'aboutement de deux communications vocales ne nécessite pas de description détaillée puisque de nombreux dispositifs existants le supportent (par exemple : certains PABX dotés d'une version logicielle récente).
- Une durée Tmax (telle que définie ci-dessus) s'écoule sur le GAI sans que l'abonné Z n'ait décroché. A partir de cet instant, la dernière demande d'établissement de communication de X vers Y est acquittée (rejet) via le protocole D, ce qui permet d'éviter à l'utilisateur appelant d'être imputé d'une communication.

### TROISIEME VARIANTE DE REALISATION

Ce troisième mode de réalisation utilise le complément de service « signalisation d'usager à usager » des RNIS pour véhiculer le numéro Z de l'appelé final du demandeur (appelant) X vers le premier intermédiaire Y.

Cette troisième variante de réalisation est similaire à la deuxième variante décrite ci-dessus, et comporte les mêmes avantages.

Le complément de service « signalisation d'usager à usager » consiste en un champ de 128 caractères (octets) maximum véhiculé dans les messages d'établissement ou de libération d'appel du protocole D.

Le TDN utilise ce complément de service (dénommé MINIMESSAGE en France) pour véhiculer jusqu'au détaillant en communications le numéro Z de l'abonné appelé.

Cette information nécessaire à l'établissement d'une communication entre le demandeur et l'appelé final transite donc via le canal D.

L'intérêt économique de ce mode de réalisation résulte du fait que dans de nombreux pays, le coût du complément de service « signalisation d'usager à usager » est à un niveau très bas.

Dans les réalisations nationales des RNIS, le nombre maximal de caractères de la signalisation d'usager à usager est inférieur à 128. En France par exemple, la signalisation d'usager à usager est limitée à 10 caractères seulement dans sa variante Facilité d'Usager à Usager et à 35 ou 67 octets dans sa variante Information d'Usager à Usager (voir STAS Numéris, édition 3, tome 4, paragraphe 7). Cette limite est alors insuffisante pour transmettre tout numéro du plan de numérotage public mondial. Dans de tels cas, l'invention s'adapte aux contraintes de taille de la signalisation d'usager à usager de la façon suivante, qui est similaire (sinon identique) à celle décrite ci-avant dans la deuxième variante de réalisation.

Soit Nmm (Nmm>0) le nombre maximal de caractères que peut contenir la signalisation d'usager à usager d'un RNIS donné.

Comme dans le deuxième mode de réalisation, le TDN utilise plusieurs demandes d'établissement de communication successives pour transporter jusqu'au détaillant la totalité du numéro de l'abonné appelé. Le GAI n'établit la communication que lorsque la totalité de ce numéro a été reçue.

Par exemple, de manière similaire à la méthode décrite pour la deuxième variante les deux premiers caractères de la signalisation d'usager à usager du premier message d'établissement de la communication peuvent représenter la longueur (exprimée par exemple en nombre de chiffres décimaux et donc comprise entre 1 et 99) du numéro de l'appelé final. Ainsi, le GAI sait au bout de combien de tentatives d'établissement il doit établir la communication

Si Nte est le nombre de tentatives d'établissement de communication, si L est le nombre de chiffres décimaux du numéro Z de l'appelé final et si E (n) désigne la partie entière de n, on a alors Nte= E ( [L+1] / Nmm ) + 1. Le paramètre L est passé en premier au dispositif côté premier intermédiaire de manière à lui permettre de calculer Nte. Pour toutes les demandes d'établissement de communication émanant d'un même demandeur X, sauf la dernière (Nte^{ième}), le GAI demande le renvoi d'un acquittement négatif (libération) à la demande d'établissement afin de couper la connexion sur le canal D, ce qui permet l'enchaînement très rapide (utilisation exclusive du canal D) des Nte demandes d'établissement successives.

Cette solution démontre que l'utilisation du service d'identification de l'appelant des RNIS est indispensable pour acheminer Z vers le premier intermédiaire car sinon, il pourrait y avoir apparition d'ambiguïtés comme décrit ci-avant pour la deuxième variante.

Prenons comme exemple un numéro Z appelé comprenant neuf chiffres (L=9; prenons Z = 9 87 65 43 21) et une longueur maximale de signalisation d'usager à usager égale à quatre caractères (Nmm=4). Il est nécessaire côté TDN d'initier trois communications téléphoniques successives. Les deux premières n'aboutissent pas alors que la troisième aboutit et autorise éventuellement (par exemple s'il n'y a pas d'occupation au numéro Z) l'ouverture du canal B permettant la communication vocale avec l'appelé final.

Dans cet exemple, la première communication téléphonique de X vers Y contient la signalisation d'usager à usager « 0998 ». Les deux premiers caractères représentent la longueur du numéro demandé Z, c'est-à-dire 09 ici. Les deux derniers caractères sont les deux premiers digits du numéro Z.

La seconde communication téléphonique de X vers Y contient la signalisation d'usager à usager « 7654 ».

La troisième communication téléphonique de X vers Y contient la signalisation d'usager à usager « 321 ».

Comme pour la deuxième variante, pour les installations téléphoniques n'ayant pas souscrit au contrat SDA, des postes téléphoniques internes différents sont vus du RNIS comme dotés d'un même et unique numéro X. Il en résulte l'apparition d'ambiguïtés si deux postes internes appellent le premier intermédiaire simultanément, d'où des erreurs de reconstruction du numéro Z si L+2 est supérieur strictement à Nmm. Sous cette condition, ces ambiguïtés peuvent être levées en modifiant le codage de la signalisation d'usager à usager tel que décrit précédemment. Il suffit alors d'injecter comme premier caractère de la signalisation d'usager à usager de toutes les demandes d'établissement d'un même poste interne un caractère tiré au sort entre « a » et « z » par exemple. Dans ces conditions, le nombre de demandes d'établissement nécessaires avant d'établir réellement la communication téléphonique utile augmente, mais jusqu'à vingt-six postes internes distincts peuvent appeler le premier intermédiaire simultanément. Dans l'exemple précédent, on trouve Nte= 4 demandes d'établissement (pour un numéro de neuf digits et une signalisation d'usager à usager de quatre caractères au maximum) au lieu de 3.

Comme la signalisation d'usager à usager transporte des octets, il est possible de coder le numéro Z en hexadécimal de manière à faire tenir deux digits de Z par octets au lieu d'un seul digit par octet dans la méthode décrite plus haut. En reprenant l'exemple précédent (Z= 9 87 65 43 21), la signalisation d'usager à usager contient la chaîne suivante (en hexadécimal) : 09 98 76 54 32 1x (x étant un chiffre hexadécimal quelconque), soit 6 octets au lieu de 11 précédemment. On peut même se contenter de 5 octets dans la signalisation d'usager à usager si on considère qu'un numéro de téléphone est toujours de longueur inférieure ou égale à 10 digits. La signalisation d'usager à usager contiendra dans ce cas la chaîne suivante (en hexadécimal) : 99 87 65 43 21. Ce type de codage peut permettre de réduire, éventuellement à 1 qui est la valeur optimale, le nombre d'itérations (demandes d'établissement successives).

Si un autocommutateur privé (PABX) est choisi en tant qu'interface (3), le mécanisme est alors implanté sous forme logicielle dans l'Unité de Commande (UC) du PABX.

Sur sollicitation d'un poste dédié, l'UC mémorise le numéro demandé final Z et sa longueur L qu'elle vient de calculer (exprimée en nombre de chiffres).

Si Nmm est la longueur maximale de la signalisation d'usager à usager et si Nmm est inférieur à (L+2), le numéro Z est découpé en morceaux : les (Nmm-2) premiers digits, puis les Nmm suivants, etc... jusqu'à ce que tous les digits de Z aient été utilisés.

L'UC demande alors une communication téléphonique avec identification du demandeur à destination du premier intermédiaire et en injectant dans la signalisation d'usager à usager :
- la longueur L du numéro Z (en nombre de chiffres);
- puis les (Nmm-2) premiers digits du numéro Z.

L'UC abandonne la communication après réception sur le canal D de la confirmation de l'établissement d'appel.

L'UC demande alors une nouvelle communication identique à la première, mais en utilisant les Nmm digits suivants de Z en tant que sous-adresse.

Ce processus itératif se poursuit jusqu'à ce que tous les chiffres de Z aient été utilisés.

Le dispositif analogue côté premier intermédiaire (dénommé GAI) peut alors autoriser l'établissement de la communication sur le canal B ce qui permet la communication vocale avec le correspondant final au numéro Z en supposant qu'une communication vocale a été établie entre le premier intermédiaire et ce correspondant final.

Avec ce mécanisme, une seule tentative de communications est possible à un instant donné pour les installations multi-postes non dotées de la SDA. Dans de tels cas particuliers, le TDN mémorise toute demande concurrente d'un autre poste téléphonique interne à destination du premier intermédiaire. Lorsque la demande de communication indirecte en cours est satisfaite (connexion) ou rejetée (libération) par le premier intermédiaire, la suivante en attente peut être traitée par le TDN.

Les moyens techniques constituant cette troisième variante de l'invention peuvent également être implantés dans des terminaux téléphoniques RNIS.

Dans ces conditions, le TDN peut être implanté sous forme de nouveau module situé entre l'interface de dialogue usager-terminal et le module de gestion des communications. Sa tâche consiste alors à successivement :
- substituer au numéro Z demandé via l'interface de dialogue usager-terminal le numéro du premier intermédiaire;
- calculer la longueur de ce numéro Z et en déduire le nombre de tentatives d'établissement Nte nécessaires selon l'algorithme donné ci-dessus ;
- demander au module de gestion des communications l'établissement de communications avec identification de l'appelant à destination du premier intermédiaire et en remplissant la signalisation d'usager à usager comme décrit plus haut de manière à transporter (éventuellement par parties successives) l'intégralité du numéro Z.

Le GAI peut être implanté sous forme de nouvelle version logicielle sur un PABX.

Le logiciel implantant le GAI doit, lors de la première demande d'établissement du demandeur au numéro X, lire la signalisation d'usager à usager. Les deux premiers caractères sont lus en premier car ils donnent la longueur du numéro Z, ce qui permet, connaissant la longueur maximale de la signalisation d'usager à usager Nmm, de déterminer le nombre Nte de tentatives d'établissement d'appels successives qui émanent de X.

Le reste de la signalisation d'usager à usager est mémorisé en tant que premiers digits de Z.

Si Nmm est inférieur à L+2, alors la GAI doit attendre les demandes d'établissement d'appel suivantes de X pour compléter le numéro Z. Le GAI ne donne donc pas suite (libération) aux demandes d'établissement d'appel de X tant que Z n'est pas connu dans sa totalité.

Lorsque Z est complètement connu (Nte^{ième} demande d'établissement), le GAI demande l'ouverture du canal B pour permettre la communication vocale si certaines conditions sont satisfaites. Ces conditions sont identiques à celles mentionnées ci-avant concernant la deuxième variante de réalisation.

Le protocole de communication comporte quatre étapes essentielles identiques ou similaires à celles du protocole de la deuxième variante (Cf ci-dessus).
Etape 1 : Préparation des demandes d'établissement sur le TDN
   Le TDN construit la ou les demandes (paramètre Nte décrit plus haut) d'établissement de communications à destination du premier intermédiaire : substitution du numéro de premier intermédiaire au numéro Z demandé et inclusion du numéro Z dans une ou plusieurs signalisations d'usager à usager.
Etape 2 : Du TDN vers le GAI (de X vers Y)
   Le TDN demande une communication RNIS avec les caractéristiques suivantes :
   a/ identification de l'appelant (numéro X);
   b/ l'appelé est le premier intermédiaire (numéro Y);
   c/ signalisation d'usager à usager contenant tout ou partie du numéro Z.

   Si Nte (Nte>1) demandes successives d'établissement de communication sont nécessaires du fait d'une longueur de signalisation d'usager à usager insuffisante pour véhiculer l'intégralité du numéro Z, le GAI ne donne pas suite (libération) aux Nte-1 premières demandes d'établissement (qu'il identifie grâce au numéro d'appelant X dont il a connaissance [caractéristique a/ ci-dessus]).
   Lorsque les Nte demandes d'établissement de communication provenant de la même origine sont reçues, le GAI dispose de toutes les informations pour établir une communication du premier intermédiaire Y vers l'abonné au numéro Z.
Etape 3 : Reconstruction du numéro Z
   Le GAI dispose du numéro Z dans son intégralité, qu'il reconstruit au besoin par concaténation des signalisations d'usager à usager successivement reçues lorsque la longueur maximale de la signalisation d'usager à usager sur le RNIS utilisé ne permet pas de véhiculer en une seule demande d'établissement la totalité du numéro Z.
Etape 4 : établissement d'une communication avec Z d'une part et l'origine X d'autre part : cette étape est identique à l'étape 4 du protocole décrit ci-avant pour la deuxième variante de réalisation.
   Les deuxième et troisième variantes de réalisation décrites ci-avant peuvent être implantées simultanément sur un même TDN et un même GAI.

L'intérêt d'une implantation simultanée de ces modes de réalisation sur le même dispositif réside dans l'adaptation aux caractéristiques techniques et tarifaires du RNIS emprunté. Par exemple, si un RNIS permet l'utilisation gratuite d'une sous-adresse de longueur maximale égale à 20 chiffres, l'utilisateur paramétrera le dispositif combiné sur le mode de fonctionnement correspondant à la deuxième variante de réalisation.

De préférence, l'unité de traitement (13) désignée ci-avant par TDN, du terminal ou du dispositif équipant le site intermédiaire (désignée alors par GAI), est reliée à une unité de mémoire (repère 15 figure 2) dans laquelle sont enregistrés le ou les nombres (ci-avant Nsa, respectivement Nmm) maximaux de chiffres (respectivement de caractères) que peuvent contenir les messages du complément de service de sous-adresse (respectivement de signalisation d'usager à usager) utilisé dans la deuxième variante (respectivement troisième variante) pour transmettre le numéro Z appelé.

## Revendications

1. Procédé de télécommunication entre un abonné appelant et un abonné appelé (8) dont le numéro d'appel est noté (Z), **caractérisé en ce que** l'on substitue automatiquement un numéro (Y) d'un site intermédiaire (4, 54, 55) qui est raccordé au réseau RNIS (2), audit numéro (Z) de l'abonné appelé final (8), **en ce que** l'on transmet ledit numéro (Z) de l'abonné appelé final, par le canal D de signalisation du réseau RNIS, audit site intermédiaire (4, 54, 55), celui-ci procédant à une demande de communication à destination dudit abonné appelé (Z), pour établir, le cas échéant (étape 215), une communication entre l'abonné appelant et l'abonné appelé.

2. Procédé de télécommunication selon la revendication 1, **caractérisé en ce que** l'abonné appelant étant connecté au réseau ANIS, on transmet ledit numéro de l'abonné appelé final, dudit abonné appelant vers ledit site intermédiaire, en utilisant un complément de service du réseau ANIS.

3. Procédé selon la revendication 2, dans lequel on utilise le service de sous adresse du canal D pour transmettre le numéro (Z) de l'abonné appelé final.

4. Procédé selon la revendication 2, dans lequel on utilise le service de signalisation d'usager à usager pour transmettre le numéro (Z) de l'appelé final.

5. Procédé selon l'une quelconque des revendications 2 à 4, dans lequel on établit la communication entre l'abonné appelant et l'abonné final par l'intermédiaire de l'abonné intermédiaire seulement après avoir vérifié que le numéro de l'abonné appelé final est disponible.

6. Procédé selon l'une quelconque des revendications 2 à 5, dans lequel, préalablement à la transmission du numéro (Z) de l'abonné appelé final, on calcule la longueur (L) du numéro (Z) et on transmet au site intermédiaire par le canal D, une information représentative de ladite longueur (L), préalablement à la transmission dudit numéro (Z).

7. Procédé de télécommunication selon la revendication 1, **caractérisé en ce que** l'abonné appelant transmet ledit numéro (Z) de l'abonné appelé final (8) à un premier noeud de transit (50) connecté au réseau ANIS, ce premier noeud de transit (50) transmettant ledit numéro (Z) de l'abonné final (8) audit site intermédiaire (54, 55), par le canal D de signalisation du réseau RNIS.

8. Procédé selon la revendication 7, dans lequel on substitue au niveau dudit premier noeud de transit le numéro d'appel (Y) dudit site intermédiaire (54, 55) qui est choisi en fonction d'un code (A) de choix émis par l'abonné appelant, au numéro (Z) de l'abonné appelé final.

9. Terminal (1, 3) numérique de télécommunication qui comporte :
- un module (18) d'interface avec un réseau (2) RNIS,
- un clavier (10),
- un module (12) d'interface utilisateur,
- un module (17) principal de commande du terminal qui est relié audit module (12) d'interface utilisateur et audit module (18) d'interface par des liaisons (23) et qui contrôle le fonctionnement du terminal,
lequel terminal comporte un moyen (13) de traitement et une unité (14) de mémoire contenant un numéro (Y) d'appel d'un site intermédiaire, lequel moyen (13) de traitement comporte un moyen de substitution d'un numéro (Z) introduit par l'utilisateur par ledit clavier, par ledit numéro (Y) enregistré dans ladite unité de mémoire, et un moyen de transmission du numéro substitué (Z) utilisant un complément de service du RNIS.

10. Système de télécommunication entre un abonné appelant et un abonné appelé final de numéro (Z) dans lequel l'abonné appelant utilise un terminal selon la revendication 9, dans lequel ledit terminal ainsi qu'un site intermédiaire sont raccordés à un réseau (2) RNIS, lequel site intermédiaire comporte :
- des moyens de détection du numéro appelé final (Z) qui est transmis par un complément de service accessible à l'utilisateur sur le canal D de signalisation du réseau RNIS,
- des moyens d'établissement d'une demande de communication à destination de l'abonné appelé ; et
- des moyens d'établissement d'une communication entre l'abonné appelant et l'abonné appelé.

## Claims

1. A telecommunications method between a calling party and a called party (8) whose call number is written (Z), **characterised in that** the number (Y) of an intermediate site (4, 54, 55) connected to the ISDN network (2) is substituted automatically for said number (Z) of the destination called party (8), **in that** said number (Z) of the destination called party is transmitted to said intermediate site via (4, 54, 55) via the signalling D channel of the ISDN network, said site proceeding with a call request made to the called party (Z), in order to establish, if need be (step 215), a call between the calling party and the called party.

2. A telecommunications method according to claim 1, **characterised in that** since the calling party is connected to the ISDN network, said destination called party number of said calling party is transmitted to said intermediate site by using supplementary ISDN network services.

3. A method according to claim 2, in which the sub-addressing service of the D channel is used for transmitting the number (Z) of the destination called party.

4. A method according to claim 2, in which the user-to-user signalling service is used for transmitting the number (Z) of the destination called party.

5. A method according to any one of claims 2 to 4, in which the call between the calling party and the destination party is established via the intermediate party only after verifying that the destination called party number is available.

6. A method according to any one of claims 2 to 5, in which, prior to transmitting the number (Z) of the destination called party, the length (L) of the number (Z) is calculated and information representative of said length (L) is transmitted to the intermediate site via the D channel before transmitting said number (Z).

7. A telecommunications method according to claim 1, **characterised in that** the calling party transmits said number (Z) of the destination called party (8) to a first transit node (50) connected to the ISDN network, with said first transit node (50) transmitting said number (Z) of the destination called party (8) to said intermediate site (54, 55) via the signalling D channel of the ISDN network.

8. A method according to claim 7, in which the call number (Y) of said intermediate site (54, 55) which is selected as a function of a selection code (A) issued by the calling party is substituted level with said first transit node for the number (Z) of the destination called party.

9. A telecommunications digital terminal (1, 3) comprising:
- an interface module (18) with an ISDN network (2);
- a keypad (10);
- a user interface module (12); and
- a main module (17) for controlling the terminal that is connected to said user interface module (12), and to said interface module (18) via links (23) and which controls the operation of the terminal;
which terminal includes processing means (13) and a memory unit (14) containing a call number (Y) for an intermediate site, which processing means (13) includes means for substituting said number (Y) stored in said memory unit for a number (Z) input by the user via said keypad, and transmission means for the substituted number (Z) using ISDN supplementary services.

10. A telecommunications system between a calling party and a destination called party having the number (Z), in which the calling party uses a terminal according to claim 9, in which said terminal as well as an intermediate site are connected to an ISDN network (2), with said intermediate site including:
- destination called number detection means (Z), which number (Z) is transmitted via supplementary services accessible by the user on the signalling D channel of the ISDN network;
- means for establishing a call request intended for the called party; and
- means for establishing a call between the calling party and the called party.

## Patentansprüche

1. Verfahren für die Telekommunikation zwischen einem anrufenden Teilnehmer und einem angerufenen Teilnehmer (8), dessen Rufnummer als (Z) vermerkt ist, **dadurch gekennzeichnet, dass** automatisch eine Nummer (Y) einer Zwischenstation (4, 54, 55), die an das ISDN-Netz (2) angeschlossen ist, an die Stelle der Nummer (Z) des angerufenen Endteilnehmers (8) gesetzt wird, dass die Nummer (Z) des angerufenen Endteilnehmers über den D-Kanal für die Signalisierung des ISDN-Netzes an die Zwischenstation (4, 54, 55) übertragen wird, wobei diese eine Gesprächsanmeldung mit dem Bestimmungsort des angerufenen Teilnehmers (Z) vornimmt, um gegebenenfalls eine Verbindung zwischen dem anrufenden Teilnehmer und dem angerufenen Teilnehmer herzustellen (Schritt 215).

2. Telekommunikationsverfahren nach Anspruch 1, **dadurch gekennzeichnet, dass** dann, wenn der anrufende Teilnehmer an das ISDN-Netz angeschlossen ist, die Nummer des angerufenen Endteilnehmers von dem anrufenden Teilnehmer zu der Zwischenstation übertragen wird, wobei ein ergänzender Dienst des ISDN-Netzes genutzt wird.

3. Verfahren nach Anspruch 2, bei dem der Dienst der Unteradresse des D-Kanals verwendet wird, um die Nummer (Z) des angerufenen Endteilnehmers zu übertragen.

4. Verfahren nach Anspruch 2, bei dem der Dienst der Signalisierung von Benutzer zu Benutzer verwendet wird, um die Nummer (Z) des angerufenen Endteilnehmers zu übertragen.

5. Verfahren nach einem der Ansprüche 2 bis 4, bei dem eine Verbindung zwischen dem anrufenden Teilnehmer und dem Endteilnehmer über den Zwischenteilnehmer nur dann hergestellt wird, wenn verifiziert worden ist, dass die Nummer des angerufenen Endteilnehmers frei ist.

6. Verfahren nach einem der Ansprüche 2 bis 5, bei dem vor der Übertragung der Nummer (Z) des angerufenen Endteilnehmers die Länge (L) der Nummer (Z) berechnet wird und der Zwischenstation vor der Übertragung der Nummer (Z) eine Information über den D-Kanal übermittelt wird, die für die Länge (L) repräsentativ ist.

7. Telekommunikationsverfahren nach Anspruch 1, **dadurch gekennzeichnet, dass** der anrufende Teilnehmer die Nummer (Z) des angerufenen Endteilnehmers (8) an einen ersten Durchgangsknoten (50) überträgt, der an das ISDN-Netz angeschlossen ist, und dieser erste Durchgangsknoten (50) die Nummer (Z) des Endteilnehmers (8) über den D-Kanal für die Signalisierung des ISDN-Netzes an die Zwischenstation (54, 55) überträgt.

8. Verfahren nach Anspruch 7, bei dem in Höhe des ersten Durchgangsknotens an die Stelle der Rufnummer (Y) der Zwischenstation (54, 55), die in Abhängigkeit von einem gewählten Code (A), der von dem anrufenden Teilnehmer gesendet wird, gewählt ist, die Nummer (Z) des angerufenen Endteilnehmers gesetzt wird.

9. Digitale Telekommunikationsendeinrichtung (1, 3), umfassend:
- ein Modul (18) einer Schnittstelle mit einem ISDN-Netz (2),
- eine Tastatur (10),
- ein Benutzerschnittstellenmodul (12),
- ein Hauptmodul (17) zur Steuerung der Endeinrichtung, das über Verbindungen (23) an das Benutzerschnittstellenmodul (12) und an das Schnittstellenmodul (18) angeschlossen ist und den Betrieb der Endeinrichtung überwacht,
wobei die Endeinrichtung ein Verarbeitungsmittel (13) und eine Speichereinheit (14) umfasst, die eine Rufnummer (Y) einer Zwischenstation enthält, wobei das Verarbeitungsmittel (13) ein Mittel zum Ersetzen einer Nummer (Z), die vom Benutzer über die Tastatur eingegeben wird, durch die in der Speichereinheit gespeicherte Nummer (Y) und ein Mittel zur Übertragung der ersetzten Nummer (Z) unter Verwendung eines ergänzenden ISDN-Dienstes umfasst.

10. System für die Telekommunikation zwischen einem anrufenden Teilnehmer und einem angerufenen Endteilnehmer mit der Nummer (Z), bei dem der anrufende Teilnehmer ein Endgerät nach Anspruch 9 verwendet, bei dem das Endgerät sowie eine Zwischenstation an ein ISDN-Netz (2) angeschlossen sind, wobei die Zwischenstation umfasst:
- Mittel zum Erfassen der angerufenen Endteilnehmernummer (Z), die über einen ergänzenden Dienst übertragen wird, der für den Benutzer über den D-Kanal für die Signalisierung des ISDN-Netzes zugänglich ist,
- Mittel zum Herstellen einer Gesprächsanmeldung mit dem Bestimmungsort des angerufenen Teilnehmers; und
- Mittel zum Herstellen einer Verbindung zwischen dem anrufenden Teilnehmer und dem angerufenen Teilnehmer.
